# EUROPÄISCHE PATENTSCHRIFT

(11) **EP 1 905 677 B1**
(45) Veröffentlichungstag und Bekanntmachung des Hinweises auf die Patenterteilung: **11.07.2012**
(21) Anmeldenummer: 07024530.3
(22) Anmeldetag: 03.11.2003
(51) Int. Cl.: B62H 5/00

(54) **Zweiradschloss**
Bicycle lock
Verrou de deux roues

(30) Priorität: 04.11.2002 DE 10251283
(43) Veröffentlichungstag der Anmeldung: 02.04.2008
(62) Teilanmeldung aus: 03788998.7
(73) Patentinhaber: ABUS August Bremicker Söhne KG, 58300 Wetter-Volmarstein (DE)
(72) Erfinder: Becker, Thomas, 65597 Hünfelden (DE); Scheppokat, Sven, 21073 Hamburg (DE); Röger, Mark, 21077 Hamburg (DE); Janssen, Rolf, 21073 Hamburg (DE)
(74) Vertreter: Manitz, Finsterwald & Partner GbR

(56) Entgegenhaltungen:
- EP-A- 0 431 642
- GB-A- 1 392 268

## Beschreibung

Die Erfindung betrifft ein Zweiradschloss zum Sichern eines Zweirads, insbesondere eines Fahrrads oder eines Motorrads. Derartige Zweiradschlösser besitzen üblicherweise einen Schlosskörper mit einem Gehäuse und einem darin beherbergten Verriegelungsmechanismus, sowie ein zusätzliches Verriegelungsteil, wie beispielsweise einen starren Bügel (im Falle eines Bügelschlosses), ein Seil (im Falle eines Seilschlosses), einen Kloben (im Falle eines Bremsscheibenschlosses) oder dergleichen.

Derartige Zweiradschlösser sollen naturgemäß möglichst aufbruchsicher sein. Zu diesem Zweck ist es beispielsweise bekannt, kritische Abschnitte des Schlosses aus gehärtetem Stahl herzustellen, um ein Durchsägen oder Aufbrechen des betreffenden Schlossabschnittes zu erschweren. Dennoch wird durch die bekannten Maßnahmen nicht immer der erwünschte Grad an Aufbruchsicherheit erreicht.

Der nächstliegende Stand der Technik wird durch das Dokument EP0431642 dargestellt und zeigt ein Zweiradschloss zum Sichern eines Zweirads, bei dem ein Schlossabschnitt mehrere keramische Verstärkungselemente in einem Metall/ Keramik-Verbund aufweist, wobei es sich bei dem Schlossabschnitt um ein Hohlteil handelt, in dem die keramischen Verstärkungselemente angeordnet sind, und wobei der Durchmesser der keramischen Verstärkungselemente ca. 1/3 des Innendurchmessers des Hohlteils beträgt.

Es ist deshalb eine Aufgabe der Erfindung, ein Zweiradschloss mit einer erhöhten Aufbruchsicherheit zu schaffen.

Diese Aufgabe wird durch ein Zweiradschloss mit den Merkmalen des Anspruchs 1 gelöst, und insbesondere dadurch, dass ein Schlossabschnitt ein oder mehrere keramische Verstärkungselemente in einem Metall/Keramik-Verbund aufweist oder vollkeramisch ausgebildet ist.

Gemäß einem ersten Aspekt ist also eine Kombination aus einer Metallstruktur und wenigstens einem keramischen Verstärkungselement vorgesehen. Beispielsweise kann ein einziges längliches oder flächiges keramisches Verstärkungselement vorgesehen sein, als integrierte Bügelverstärkung oder Gehäuseverstärkung. Oder es ist eine Mehrzahl von keramischen Verstärkungselementen vorgesehen, beispielsweise in Form von benachbart zueinander angeordneten Stäben, Kugeln oder losen oder gepressten Granulatpartikeln.

Ein Metall/Keramik-Verbund ist dadurch gebildet, dass das oder die keramischen Verstärkungselemente in eine Metallstruktur eingebettet oder eingesetzt sind oder dass - umgekehrt - Metallelemente in eine Keramikstruktur integriert sind. Ein derartiger Metall/Keramik-Verbund verbindet den Vorteil eines zähen Werkstoffs (Metall) mit dem Vorteil eines besonders harten Werkstoffs (Keramik). Der Keramikanteil innerhalb des betreffenden Schlossabschnitts bewirkt also aufgrund seiner hohen Härte eine deutliche Erschwerung eines Aufsägens oder Aufschneidens des betreffenden Schlossabschnitts. Gleichzeitig verhindert die - vergleichsweise zähe - Metallkomponente des Verbunds ein Zertrümmern des betreffenden Schlossabschnitts, falls für die Verstärkungselemente eine vergleichsweise spröde Keramik eingesetzt wird.

Gemäß einem alternativen Aspekt ist der betreffende Schlossabschnitt vollkeramisch, d.h. als ein einziges Keramikelement ausgebildet. Dies kann sich für solche Abschnitte des Zweiradschlosses als besonders nützlich erweisen, für die eine - im Vergleich zu Metall - relativ hohe Härte wichtig ist. Beispielsweise kann der Bügel eines Bügelschlosses oder ein Gehäuseabschnitt eines Bremsscheibenschlosses vollkeramisch ausgebildet sein, um ein Aufsägen oder Aufschneiden besonders wirkungsvoll zu erschweren.

Bei beiden Aspekten wird durch den Einsatz eines keramischen Werkstoffs bei erhöhter Aufbruchsicherheit eine vorteilhafte Optimierung des mitzuführenden Gewichts erreicht.

Bei dem Zweiradschloss handelt es sich um ein Bügelschloss , wobei der betreffende Schlossabschnitt durch einen Bügel des Bügelschlosses gebildet ist, der einen Hohlbügel aus Metall aufweist, in dem die keramischen Verstärkungselemente angeordnet sind. Dieser Hohlbügel bildet also eine Ummantelung für die keramischen Verstärkungselemente. Vorzugsweise ist der Hohlbügel hohlzylindrisch ausgebildet, insbesondere mit einer U-Form.

Es ist vorgesehen daß die keramischen Verstärkungselemente einen Durchmesser bzw. - im Falle vieleckiger Verstärkungselemente - eine Schlüsselweite besitzen, der oder die ca. 1/3 des Innendurchmessers des genannten Hohlbügels beträgt. Dadurch lassen sich besonders hohe Packungsdichten der Verstärkungselemente innerhalb des Bügels erreichen.

Wie bereits erwähnt, sind die keramischen Verstärkungselemente in eine Matrix eingebettet, die beispielsweise aus einem Epoxydharz, einem Elastomer, einem Polymer, einem sonstigen Kunststoff, einem Zement oder einem Metall gebildet ist. Bei dieser Matrix handelt es sich um eine starre Struktur, in die die keramischen Verstärkungselemente eingesetzt sind. Beispielsweise kann die Matrix durch eine feste Wabenstruktur gebildet sein. Für eine derartige starre Struktur aus Metall kommen beispielsweise Aluminium oder eine Aluminiumlegierung als Werkstoff in Betracht. Besonderes gut eignet sich eine Matrix aus Aluminium oder einer Aluminiumlegierung mit keramischen Verstärkungselementen aus Aluminiumoxid.

Alternativ hierzu kann die genannte Matrix durch ein Bindemittel gebildet sein, in das die keramischen Verstärkungselemente eingefüllt, eingebettet oder auf sonstige Weise eingesetzt werden, während das Bindemittel noch flüssig ist.

In beiden Fällen bewirkt die Einbettung der keramischen Verstärkungselemente in die Matrix eine vorteilhafte Dämpfung von Schlägen, die bei einem Aufbruchversuch möglicherweise auf das Zweiradschloss ausgeübt werden. Die Verstärkungselemente werden durch die Matrix also gegen ein Zertrümmern geschützt.

Desweiteren trägt die Matrix dazu bei, die einzelnen Verstärkungselemente in ihrer Position zu halten, so dass diese bei schneidenden oder sägenden Angriffen nicht aus dem Verbund gelöst werden können.

Ein weiterer Vorteil der Einbettung der keramischen Verstärkungselemente in eine Matrix besteht darin, dass die Verstärkungselemente innerhalb der Matrix drehbar gelagert sein können. Falls bei einem Versuch, den betreffenden Schlossabschnitt zu zersägen, eine Säge an einem derartigen Verstärkungselement angreift, so kann dieses durch Drehen um seine Längsachse der Sägebewegung folgen, so dass die Wirkung des Angriffs noch weiter abgeschwächt wird.

Vorzugsweise ist die Matrix zusätzlich zu der genannten Metallummantelung vorgesehen. Im Falle einer Metallmatrix ist dies jedoch nicht zwingend erforderlich, d.h. die keramischen Verstärkungselemente können auch ohne zusätzliche Metallummantelung in eine Metallmatrix eingebettet sein.

Insbesondere in dem Fall, dass es sich bei dem betreffenden Schlossabschnitt um einen Bügel eines Bügelschlosses handelt, ist es bevorzugt, wenn die keramischen Verstärkungselemente eine Längsform besitzen. Derartige längliche Verstärkungselemente können einen beliebigen Querschnitt besitzen; bevorzugt ist ein runder oder ein vieleckiger, insbesondere ein sechseckiger oder achteckiger Querschnitt. In diesen Fällen lässt sich eine besonders hohe Packungsdichte der keramischen Verstärkungselemente innerhalb einer Ummantelung erreichen.

Generell können die keramischen Verstärkungselemente die Form von Zylindern, Kreissektoren, Kreissegmenten oder Prismen besitzen. Im Falle von hexagonalen Prismen wird beispielsweise eine Packungsdichte von ca. 79 % erreicht, wenn die Schlüsselweite dieser Prismen das 0,32-fache des Innendurchmessers eines runden Hohlbügels beträgt, der mit den Verstärkungselementen befüllt wird.

Weiterhin ist es bevorzugt, wenn mehrere längliche keramische Verstärkungselemente parallel zueinander angeordnet sind.

Gemäß einer besonders vorteilhaften Ausführungsform sind mehrere nebeneinander angeordnete keramische Verstärkungselemente axial versetzt zueinander angeordnet, und/oder hintereinander angeordnete keramische Verstärkungselemente überlappen in axialer Richtung. Dadurch wird beispielsweise innerhalb einer Metallummantelung der Verstärkungselemente vermieden, dass an irgendeiner Stelle entlang der Metallummantelung ein sich über den gesamten Querschnitt erstreckender Spalt zwischen den keramischen Verstärkungselementen auftritt. Mit anderen Worten trifft eine Säge, mit der beispielsweise ein mit keramischen Verstärkungselementen befüllter Metallbügel zersägt werden soll, stets auf wenigstens ein Verstärkungselement, unabhängig davon, an welcher Stelle entlang des Metallbügels die Säge angesetzt wird.

Gemäß einer Ausführungsform können fünf parallel nebeneinander liegende Stäbchen aus Aluminiumoxid als keramische Verstärkungselemente mit einem quadratischen Querschnitt von 2,4 mm mal 2,4 mm in einen Hohlbügelabschnitt mit einem Innendurchmesser von 8,5 mm eingesetzt sein, der mit einem Zement befüllt ist.

Gemäß einer weiteren Ausführungsform können fünf parallel nebeneinander liegende Rundstäbe aus kobaltgebundenem Wolframcarbid als keramische Verstärkungselemente mit einem Durchmesser von 2,5 mm in einen Hohlbügelabschnitt mit einem Innendurchmesser von 8,5 mm eingesetzt sein, der mit einem Zement befüllt ist.

Die keramischen Verstärkungselemente können ein Aspektverhältnis von 1 bis 1.000 besitzen, mit einem Durchmesser bzw. einer Schlüsselweite von 0,1 bis 10 mm und mit einer Länge von 1 bis 100 mm. Als Aspektverhältnis ist in diesem Zusammenhang das Verhältnis der großen Achse zu der kleinen Achse des Verstärkungselements zu verstehen, also beispielsweise im Falle eines zylindrischen Verstärkungselements das Verhältnis der Länge zu dem Durchmesser.

Insbesondere können für die keramischen Verstärkungselemente eine Länge zwischen 10 und 20 mm und ein Durchmesser bzw. - im Falle eines vieleckigen Querschnitts - eine Schlüsselweite zwischen 0,7 und 1,5 mm vorgesehen sein.

Die genannten keramischen Verstärkungselemente können zumindest teilweise aus Al₂O₃, ZrO₂, Si₃N₄, SiC, TiC, aus einem Hartmetall oder aus einem Cermet gebildet sein, wobei als Hartmetall insbesondere kobaltgebundenes Wolframcarbid in Frage kommt.

Bei dem genannten Schlossabschnitt des Zweiradschlosses kann es sich auch um einen Gehäuseabschnitt handeln, insbesondere um einen Abschnitt eines Gehäuses eines Bremsscheibenschlosses. In diesem Fall sind also ein oder mehrere keramische Verstärkungselemente in das Gehäuse oder in eine Gehäusewandung integriert, oder das Gehäuse besitzt einen vollkeramischen Gehäuseabschnitt oder eine vollkeramische Wandung. Für diese Ausführungsform ist es bevorzugt, wenn die keramischen Verstärkungselemente flächig ausgebildet sind. Eine Integration von Verstärkungselementen in das Gehäuse ist besonders einfach, wenn dieses als ein Gussgehäuse gefertigt ist. Als keramische Werkstoffe kommen beispielsweise Al₂O₃, ZrO₂, Si₃N₄, SiC, TiC oder ein Cermet in Betracht.

Weitere Ausführungsformen der Erfindung sind in den Unteransprüchen genannt. Die Erfindung wird nachfolgend beispielhaft unter Bezugnahme auf die Zeichnungen erläutert.
- Fig. 1: zeigt ein Bügelschloss mit einem Hohlbügel, in dem keramische Verstärkungselemente angeordnet sind.
- Fig. 2a, 2b und 2c: zeigen Querschnitte durch verschiedene Ausführungsformen des Bügels gemäß Fig. 1.
- Fig. 3 und 4: zeigen verschiedene Ausführungsformen eines Bügelschlosses mit einem Bügel, dessen keramischer Kern von einer Metallummantelung umgeben ist.
- Fig. 5: zeigt ein Bügelschloss mit einem vollkeramischen Bügel.
- Fig. 6: zeigt ein Bremsscheibenschloss mit einem Gehäuse, in das keramische Verstärkungselemente integriert sind.

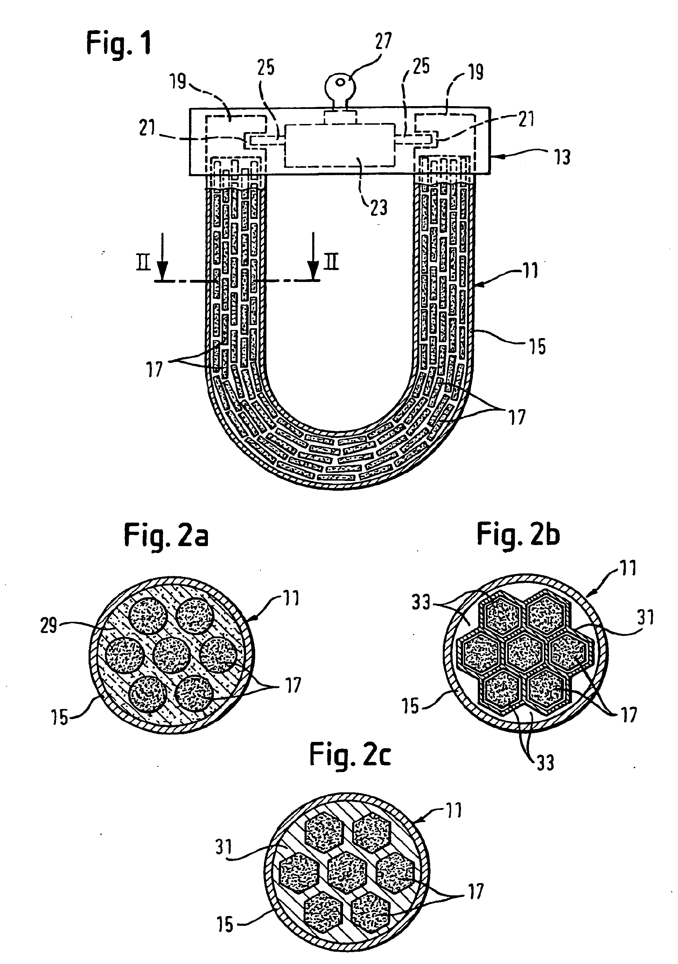

Fig. 1 zeigt ein Bügelschloss mit einem Bügel 11 und einem Schlosskörper 13. Der Bügel 11 besitzt einen Hohlbügel 15 aus gehärtetem Stahl. Innerhalb des Hohlbügels 15 ist eine Vielzahl von länglichen keramischen Verstärkungselementen 17 angeordnet, die in eine Matrix eingebettet sind, wie nachfolgend noch erläutert wird.

Der Bügel 11 besitzt eine U-Form, wobei an den beiden freien Enden jeweils ein Verriegelungsabschnitt 19 aus Metall angeformt ist. Jeder Verriegelungsabschnitt 19 besitzt eine Riegelaufnahme 21. Die beiden Enden des Bügels 11 ragen mit den Verriegelungsabschnitten 19 in den Schlosskörper 13 hinein. Dort können die beiden Verriegelungsabschnitte 19 auf an sich bekannte Weise mittels eines Verriegelungsmechanismus 23 verriegelt werden, wobei wahlweise zwei Riegelelemente 25 in die Riegelaufnahmen 21 eingreifen. Der Verriegelungsmechanismus 23 kann mittels eines Schlüssels 27 betätigt werden.

Die keramischen Verstärkungselemente 17 bestehen beispielsweise aus A1₂O₃, ZrO₂, Si₃N₄, SiC, TiC, Hartmetall oder einem Cermet. Die keramischen Verstärkungselemente 17 sind hinsichtlich ihrer Längsform im Wesentlichen parallel zueinander ausgerichtet, wobei diese Ausrichtung der U-Form des Bügels 11 folgt. Ferner sind benachbarte Verstärkungselemente 17 axial versetzt zueinander angeordnet.

Das in Fig. 1 gezeigte Zweiradschloss dient zum Sichern eines Zweirads. Zu diesem Zweck werden beispielsweise ein Abschnitt des Zweiradrahmens und ein Pfosten oder eine Straßenlaterne von dem Bügel 11 umgriffen. Danach wird der Bügel 11 geschlossen, indem der Schlosskörper 13 an den Bügelenden verriegelt wird, wie in Fig. 1 gezeigt.

Um eine besonders hohe Aufbruchsicherheit zu gewährleisten und insbesondere den Versuch eines Zersägens oder Aufschneidens des Bügels 11 zu verhindern oder zumindest zu erschweren, ist der Hohlbügel 15 mit den keramischen Verstärkungselementen 17 gefüllt. Die keramischen Verstärkungselemente 17 zeichnen sich durch eine besonders hohe Härte aus, die einem Säge- oder Schnittwerkzeug einen besonders hohen Widerstand liefert, so dass ein Durchtrennen des Bügels 11 allenfalls mit sehr hohem Zeitaufwand erreicht werden kann.

Gleichzeitig kann der Bügel 11 - trotz Einsatzes eines keramischen Werkstoffes - nicht leicht zertrümmert werden. Hierzu trägt zum einen bei, dass innerhalb des Hohlbügels 15 eine Vielzahl von keramischen Verstärkungselementen 17 vorgesehen ist, so dass viele einzelne keramische Einheiten vorhanden sind, die nicht leicht gemeinsam kraft- oder druckbeaufschlagt werden können. Vor allem jedoch bilden die keramischen Verstärkungselemente 17 zumindest zusammen mit dem Hohlbügel 15 einen Metall/ Keramik-Verbund, wobei die durch den Hohlbügel 15 gebildete Ummantelung die keramischen Verstärkungselemente 17 gegen einen direkten Angriff bei einem Aufbruchversuch schützt.

Der Hohlbügel 15 kann beispielsweise einen Außendurchmesser zwischen 13 und 20 mm bei einer Wandstärke von 2 bis 5 mm besitzen. Der Durchmesser bzw. die Schlüsselweite der keramischen Verstärkungselemente 17 kann beispielsweise ca. 1/3 des Innendurchmessers des Hohlbügels 15 betragen, wobei auch geringere Werte möglich sind, beispielsweise zwischen 0,7 und 1,5 mm.

Die keramischen Verstärkungselemente 17 können beispielsweise eine Länge zwischen 10 und 20 mm besitzen, wobei entweder alle Verstärkungselemente 17 dieselbe Länge besitzen, oder wobei unterschiedliche Längen vorgesehen sind, um die erläuterte, vorteilhafte axiale Versetzung der Verstärkungselemente 17 relativ zueinander zu begünstigen.

Fig. 2a zeigt einen Querschnitt des Bügels 11 gemäß Fig. 1 nach einer ersten Ausführungsform. Bei dieser Ausführungsform sind jeweils sieben keramische Verstärkungselemente 17 nebeneinander angeordnet, wobei sechs Verstärkungselemente 17 in einer im Wesentlichen gleichmäßigen Teilung ein zentrales Verstärkungselement 17 umgeben (Hexagonalanordnung).

Die Verstärkungselemente 17 sind in eine Matrix eingebettet, die durch ein Bindemittel 29 gebildet ist. Bei dem Bindemittel 29 handelt es sich beispielsweise um ein Epoxydharz, ein Elastomer, ein Polymer, einen sonstigen Kunststoff, einen Zement oder ein Metall. Das Bindemittel 29 fixiert die keramischen Verstärkungselemente 17 innerhalb des Hohlbügels 15 in axialer und radialer Richtung. Außerdem bewirkt das Bindemittel 19 einen zusätzlichen Schutz der Verstärkungselemente 17 vor Schlägen oder sonstigen Angriffen von außen. Die Anordnung aus keramischen Verstärkungselementen 17, die in das Bindemittel 29 beispielsweise aus Epoxydharz eingebettet sind, einerseits und der Hohlbügel 15 aus gehärtetem Stahl andererseits bilden gemeinsam einen Metall/Keramik-Verbund.

Die Herstellung des U-förmigen Bügels 11 mit den darin enthaltenen keramischen Verstärkungselementen 17 kann beispielsweise dadurch erfolgen, dass das Matrixmaterial bzw. Bindemittel 29 in flüssigem Zustand mit darin enthaltenen Verstärkungselementen 17 von beiden Enden aus in den vorgeformten Hohlbügel 15 eingefüllt wird, wobei das Bindemittel 29 anschließend in dem Hohlbügel 15 aushärtet. Diese Vorgehensweise wird begünstigt, falls der Bügel 11 anstelle der in Fig. 1 gezeigten U-Form eher eine V-Form besitzt.

Alternativ hierzu kann der Hohlbügel 15 zunächst geradlinig ausgebildet sein, also in der Form eines Metallrohrs. Dieses Metallrohr wird von einem Ende aus mit dem flüssigen Bindemittel 29 und den darin enthaltenen Verstärkungselementen 17 befüllt. Ein nachfolgendes Biegen des Hohlbügels 15 in die in Fig. 1 gezeigte U-Form kann anschließend erfolgen, während das Bindemittel 29 noch flüssig ist, oder nachdem das Bindemittel 29 bereits ausgehärtet ist. Insbesondere in dem letztgenannten Fall ist es von Vorteil, wenn die keramischen Verstärkungselemente 17 eine vergleichsweise geringe Länge besitzen, um während des Umbiegens des Hohlbügels 15 nicht beschädigt zu werden.

Alternativ zu den in Fig. 1 und 2a gezeigten länglichen keramischen Verstärkungselementen 17 kann beispielsweise auch ein keramisches Granulat vorgesehen sein, das dem Bindemittel 29 beigemengt wird.

Fig. 2b zeigt einen Querschnitt durch den Bügel 11 gemäß Fig. 1 nach einer zweiten Ausführungsform. Bei dieser Ausführungsform sind ebenfalls sieben Verstärkungselemente 17 nebeneinander vorgesehen, wobei diese Verstärkungselemente 17 jedoch jeweils einen sechseckigen Querschnitt besitzen. Die Verstärkungselemente 17 sind in eine Matrix eingesetzt, die durch eine Wabenstruktur 31 aus Aluminium oder einer Aluminiumlegierung gebildet ist. Die Wabenstruktur 31 und die vorzugsweise aus Aluminiumoxid bestehenden Verstärkungselemente 17 bilden somit einen Metall/Keramik-Verbund, der zusätzlich von dem Hohlbügel 15 ummantelt ist.

Fig. 2c zeigt einen Querschnitt durch den Bügel 11 gemäß Fig. 1 nach einer dritten Ausführungsform. Hier ist eine massive Wabenstruktur 31 vorgesehen, die als Matrix dient, in die in einer Hexagonalanordnung sieben keramische Verstärkungselemente 17 mit sechseckigem Querschnitt formschlüssig eingesetzt sind. Die Wabenstruktur 31 ist formschlüssig in einen Hohlbügel 15 aus Metall eingesetzt.

Durch die in Fig. 2b und 2c gezeigten Formgebungen und Anordnungen der keramischen Verstärkungselemente 17 wird innerhalb des Hohlbügels 15 eine besonders hohe Packungsdichte erreicht.

Die Herstellung eines Bügels 11 gemäß der in Fig. 2b und 2c gezeigten Ausführungsformen kann auf einfache Weise beispielsweise dadurch erfolgen, dass zunächst in die Wabenstruktur 31 die keramischen Verstärkungselemente 17 eingesetzt werden und anschließend die derartig befüllte Wabenstruktur 31 in ein Metallrohr eingesetzt wird. Danach wird das Metallrohr gebogen, um den in Fig. 1 gezeigten U-förmigen Hohlbügel 15 zu bilden. Die Wabenstruktur 31 ist zwar starr, jedoch ausreichend biegsam, um das erläuterte Umbiegen zu gestatten. In einem nachfolgenden Vergütungsvorgang des Hohlbügels 15 (Erhitzen und Abschrecken) kann auch die Wabenstruktur 31 vorübergehend geschmolzen werden, so dass nach neuerlichem Erhärten der Wabenstruktur 31 die keramischen Verstärkungselemente 17 ortsfest fixiert sind. Zur Optimierung des Prozesses können eventuell vorhandene Hohlräume 33 (Fig. 2b) vor dem Vergütungsvorgang mit pulverförmigen Matrixmaterial aufgefüllt werden.

Zu dem in Fig. 1, 2a, 2b und 2c gezeigten Bügelschloss ist noch anzumerken, dass auch eine andere Anzahl von nebeneinander angeordneten Verstärkungselementen 17 vorgesehen sein kann, beispielsweise eine Anzahl von drei bis zwölf Verstärkungselementen 17.

Ferner ist anzumerken, dass die keramischen Verstärkungselemente 17 - alternativ zu der Einbettung in eine Matrix 29, 31 - auch lose in den Hohlbügel 15 eingesetzt werden können.

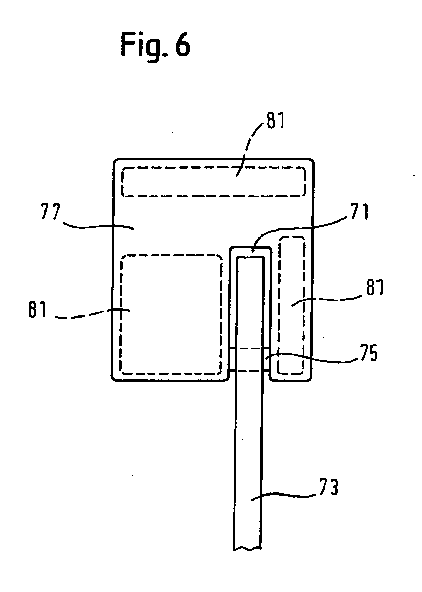

Schließlich kann - zusätzlich zu dem Bügel 11 - auch der Schlosskörper 13 keramische Verstärkungselemente besitzen, um einen Angriff an dem Schlosskörper 13 zusätzlich zu erschweren. Beispielsweise können keramische Verstärkungselemente in das Gehäuse des Schlosskörpers 13 integriert sein, wie nachfolgend noch im Zusammenhang mit Fig. 6 erläutert wird.

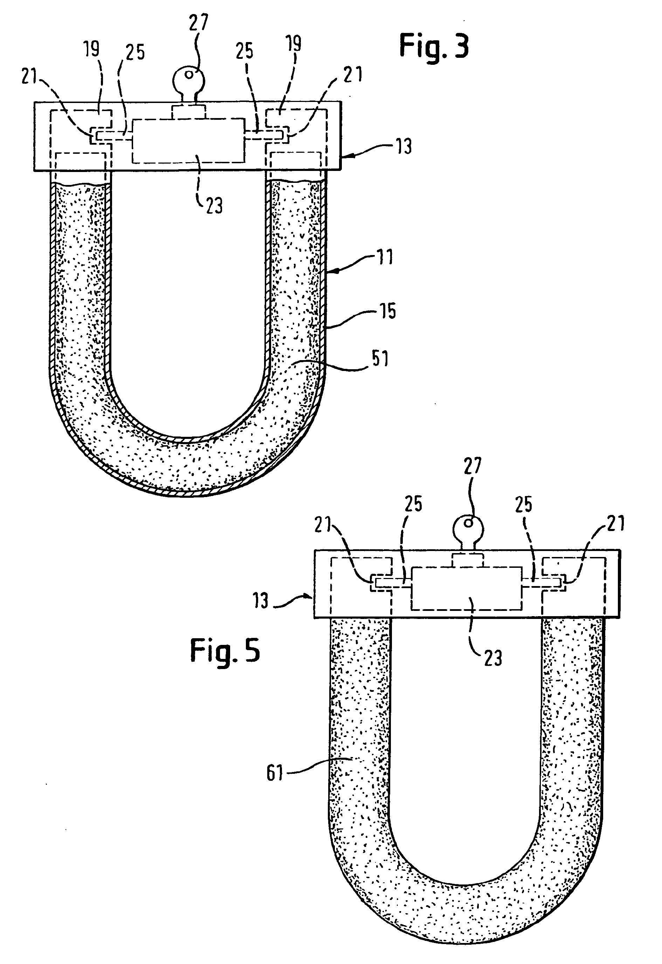

Fig. 3, 4 und 5 zeigen weitere Ausführungsformen eines Bügelschlosses, bei dem gleichartige Teile wie in Fig. 1 mit denselben Bezugszeichen gekennzeichnet sind.

Fig. 3 zeigt ein Bügelschloss, dessen Bügel 11 ein einziges, U-förmiges keramisches Verstärkungselement 51 besitzt, das von einem Hohlbügel 15 aus gehärtetem Stahl ummantelt ist. Der massive keramische Kern des Bügels 11 erschwert ein Zersägen oder Zerschneiden des Bügels 11, während die Ummantelung mittels des Hohlbügels 15 das Verstärkungselement 51 gegen unmittelbare Angriffe von außen, insbesondere durch Schläge schützt.

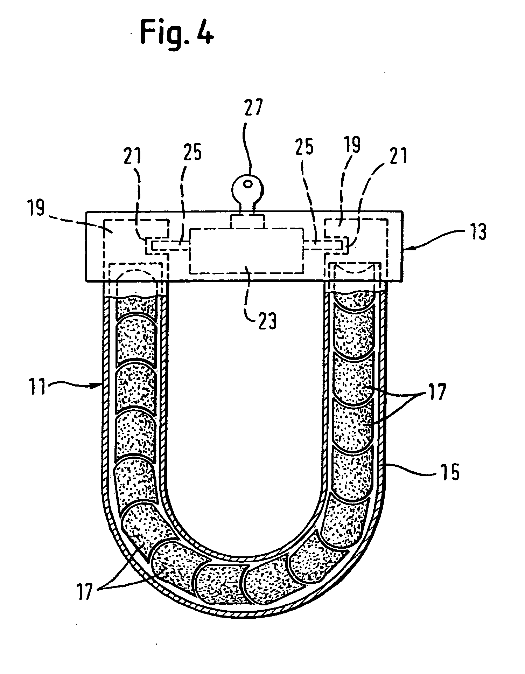

Fig. 4 zeigt eine Abwandlung des Bügelschlosses gemäß Fig. 3, bei der in den Hohlbügel 15 aus gehärtetem Stahl mehrere keramische Verstärkungselemente 17 im Wesentlichen formschlüssig hintereinander eingesetzt sind. Der Keramikeinsatz dieses Bügels 11 ist also axial segmentiert. Die Verstärkungselemente 17 besitzen eine zylindrische Grundform, wobei - nach Art einer so genannten Isolierperle - jeweils eine Stirnseite konkav gewölbt und die andere Stirnseite konvex gewölbt ist. Jede konvexe Stirnseite eines Verstärkungselements 17 greift in die konkave Stirnseite des benachbarten Verstärkungselements 17 ein. Auf diese Weise können die Verstärkungselemente 17 auch entlang der U-förmigen Biegung des Hohlbügels 15 axial überlappend angeordnet sein. Dabei werden ebene Spalte zwischen den Verstärkungselementen 17, die ein Zersägen oder Zerschneiden des Bügels 11 erleichtern könnten, vermieden.

Die Verstärkungselemente 17 können optional auch hohl ausgebildet sein, mit einem Draht bzw. einer Stahlseele zum Auffädeln der einzelnen Verstärkungselemente 17.

Fig. 5 zeigt ein Bügelschloss, dessen Bügel 61 vollkeramisch ausgebildet ist. Optional können die beiden Enden dieses Bügels 61 Verriegelungsabschnitte aus Metall besitzen, um ein besonders zuverlässiges Zusammenwirken mit dem Verriegelungsmechanismus 23 des Schlosskörpers 13 zu gewährleisten (in Fig. 5 nicht gezeigt). Der Bügel 61 kann teilweise oder vollständig aus Al₂O₃, ZrO₂, Si₃N₄, SiC, TiC, Hartmetall oder einem Cermet gebildet sein.

Fig. 6 zeigt ein Bremsscheibenschloss, das auf an sich bekannte Weise mit einem Aufnahmeschlitz 71 eine Bremsscheibe 73 eines Motorrads umgreift. Ein Riegel 75 durchquert den Aufnahmeschlitz 71 sowie eine in der Bremsscheibe 73 vorgesehene Bohrung, so dass die Bremsscheibe 73 hierdurch gegen eine unbefugte Bewegung gesichert ist.

In das Gehäuse 77 aus Metall sind mehrere keramische Verstärkungselemente 81 integriert, um das gezeigte Bremsscheibenschloss zusätzlich gegen Aufbruchversuche zu sichern. Beispielsweise sind in der Umgebung des Aufnahmeschlitzes 71 ein längliches und ein flächiges keramisches Verstärkungselement 81 vorgesehen. An der dem Aufnahmeschlitz 71 gegenüber liegenden Stirnseite des Gehäuses 77 ist ebenfalls ein längliches keramisches Verstärkungselement 81 in die Gehäusewandung integriert. Die keramischen Verstärkungselemente 81 können beispielsweise aus Al₂O₃, ZrO₂, Si₃N₄, SiC, TiC oder einem Cermet gebildet sein.

### Bezugszeichenliste

- 11: Bügel
- 13: Schlosskörper
- 15: Hohlbügel
- 17: keramisches Verstärkungselement
- 19: Verriegelungsabschnitt
- 21: Riegelaufnahme
- 23: Verriegelungsmechanismus
- 25: Riegelelement
- 27: Schlüssel
- 29: Bindemittel
- 31: Wabenstruktur
- 33: Hohlraum
- 51: keramisches Verstärkungselement
- 61: Bügel
- 71: Aufnahmeschlitz
- 73: Bremsscheibe
- 75: Riegel
- 77: Gehäuse
- 81: keramisches Verstärkungselement

## Patentansprüche

1. Zweiradschloss zum Sichern eines Zweirads,
bei dem ein Schlossabschnitt (11, 61, 77) mehrere keramische Verstärkungselemente (17, 51, 81) in einem Metall/Keramik-Verbund aufweist,
wobei es sich bei dem Zweiradschloss um ein Bügelschloss handelt, wobei es sich bei dem Schlossabschnitt um einen Bügel (11) des Bügelschlosses handelt, der einen Hohlbügel (15) aufweist, in dem die keramischen Verstärkungselemente (17, 51) angeordnet sind, wobei der Durchmesser der keramischen Verstärkungselemente (17) ca. 1/3 des Innendurchmessers des Hohlbügels (15) beträgt, wobei die keramischen Verstärkungselemente (17) in eine Matrix (29, 31) aus einem Epoxydharz, aus einem Kunststoff, aus einem Elastomer, aus einem Polymer, aus einem Zement oder aus einem Metall eingebettet sind, und wobei es sich bei der Matrix
- um eine feste Wabenstruktur (31) handelt, in die die keramischen Verstärkungselemente (17) eingesetzt sind, oder
- um eine Wabenstruktur (31) aus Metall handelt, in die die keramischen Verstärkungselemente (17) eingeschmolzen sind, so dass die keramischen Verstärkungselemente (17) ortsfest fixiert sind.

2. Zweiradschloss nach Anspruch 1,
**dadurch gekennzeichnet,**
**dass** die Matrix durch ein Bindemittel (29) gebildet ist, in das die keramischen Verstärkungselemente (17) eingefüllt sind.

3. Zweiradschloss nach Anspruch 1,
**dadurch gekennzeichnet,**
**dass** die keramischen Verstärkungselemente (17) innerhalb der Matrix um ihre Längsachse drehbar gelagert sind.

4. Zweiradschloss nach einem der Ansprüche 1 bis 3,
**dadurch gekennzeichnet,**
**dass** die keramischen Verstärkungselemente (17) eine Längsform besitzen.

5. Zweiradschloss nach einem der Ansprüche 1 bis 4,
**dadurch gekennzeichnet,**
**dass** mehrere keramische Verstärkungselemente (17) parallel zueinander angeordnet sind.

6. Zweiradschloss nach einem der Ansprüche 1 bis 5,
**dadurch gekennzeichnet,**
**dass** mehrere keramische Verstärkungselemente (17) axial versetzt zueinander angeordnet sind.

7. Zweiradschloss nach einem der vorhergehenden Ansprüche,
**dadurch gekennzeichnet,**
**dass** die keramischen Verstärkungselemente (17, 51, 81) mit einer Metallummantelung (15, 31, 77) versehen sind.

8. Zweiradschloss nach einem der vorhergehenden Ansprüche,
**dadurch gekennzeichnet,**
**dass** die keramischen Verstärkungselemente (17) einen runden oder einen vieleckigen Querschnitt besitzen.

9. Zweiradschloss nach einem der vorhergehenden Ansprüche,
**dadurch gekennzeichnet,**
**dass** die keramischen Verstärkungselemente (17) axial überlappend angeordnet sind,
wobei die keramischen Verstärkungselemente (17) vorzugsweise konvexe und konkave Stirnseiten besitzen, wobei die konvexe Stirnseite eines Verstärkungselements (17) und die konkave Stirnseite eines hierzu benachbarten Verstärkungselements (17) ineinander greifen.

10. Zweiradschloss nach einem der vorhergehenden Ansprüche,
**dadurch gekennzeichnet,**
**dass** zwischen drei und zwölf keramische Verstärkungselemente (17) nebeneinander angeordnet sind.

11. Zweiradschloss nach einem der vorhergehenden Ansprüche,
**dadurch gekennzeichnet,**
**dass** fünf parallel nebeneinander liegende Stäbchen aus Al₂O₃ mit einem quadratischen Querschnitt von 2,4 mm x 2,4 mm in einen Hohlbügelabschnitt eingesetzt sind, der mit einem Zement befüllt ist.

12. Zweiradschloss nach einem der Ansprüche 1 bis 10,
**dadurch gekennzeichnet,**
**dass** fünf parallel nebeneinander liegende Rundstäbe aus kobaltgebundenem Wolframcarbid mit einem Durchmesser von 2,5 mm in einen Hohlbügelabschnitt eingesetzt sind, der mit einem Zement befüllt ist.

13. Zweiradschloss nach einem der vorhergehenden Ansprüche,
**dadurch gekennzeichnet,**
**dass** die keramischen Verstärkungselemente (17) ein Aspektverhältnis von 1 bis 1000 besitzen, mit einem Durchmesser von 0,1 bis 10 mm und mit einer Länge von 1 bis 100 mm.

14. Zweiradschloss nach einem der vorhergehenden Ansprüche,
**dadurch gekennzeichnet,**
**dass** die keramischen Verstärkungselemente (17) eine Länge von 10 bis 20 mm besitzen.

15. Zweiradschloss nach einem der vorhergehenden Ansprüche,
**dadurch gekennzeichnet,**
**dass** die keramischen Verstärkungselemente (17) einen Durchmesser von 0,7 bis 1,5 mm besitzen.

16. Zweiradschloss nach einem der vorhergehenden Ansprüche,
**dadurch gekennzeichnet,**
**dass** die keramischen Verstärkungselemente (17) teilweise oder vollständig aus Al₂O₃, ZrO₂, Si₃N₄, SiC, TiC, Hartmetall oder einem Cermet gebildet sind.

## Claims

1. A lock for two-wheel vehicles for the securing of a two-wheel vehicle, in which a lock section (11, 61, 77) has a plurality of ceramic reinforcement elements (17, 51, 81) in a metal/ceramic composite;
wherein the lock for two-wheel vehicles is a hoop lock;
wherein the lock section is a hoop (11) of the hoop lock which has a hollow hoop (15) in which the ceramic reinforcement elements (17, 51) are arranged;
wherein the diameter of the ceramic reinforcement elements (17) amounts to approximately 1/3 of the internal diameter of the hollow hoop (15);
wherein the ceramic reinforcement elements (17) are embedded in a matrix (29, 31) of an epoxy resin, of a plastic, of an elastomer, of a polymer, of a cement, or of a metal; and wherein the matrix is
- a solid honeycomb structure (31) into which the ceramic reinforcement elements (17) are inserted; or
- a honeycomb structure (31) of metal into which the ceramic reinforcement elements (17) are melted so that the ceramic reinforcement elements (17) are fixed in a stationary position.

2. A lock for two-wheel vehicles in accordance with claim 1,
**characterized in that**
the matrix is formed by a binding agent (29) into which the ceramic reinforcement elements (17) are poured.

3. A lock for two-wheel vehicles in accordance with claim 1,
**characterized in that**
the ceramic reinforcement elements (17) are rotatably supported about their longitudinal axis within the matrix.

4. A lock for two-wheel vehicles in accordance with any one of the claims 1 to 3,
**characterized in that**
the ceramic reinforcement elements (17) have an elongate shape.

5. A lock for two-wheel vehicles in accordance with any one of the claims 1 to 4,
**characterized in that**
a plurality of ceramic reinforcement elements (17) are arranged parallel to one another.

6. A lock for two-wheel vehicles in accordance with any one of the claims 1 to 5,
**characterized in that**
a plurality of ceramic reinforcement elements (17) are arranged axially offset to one another.

7. A lock for two-wheel vehicles in accordance with any one of the preceding claims,
**characterized in that**
the ceramic reinforcement elements (17, 51, 81) are provided with a metal jacket (15, 31, 77).

8. A lock for two-wheel vehicles in accordance with any one of the preceding claims,
**characterized in that**
the ceramic reinforcement elements (17) have a round or a polygonal cross-section.

9. A lock for two-wheel vehicles in accordance with any one of the preceding claims,
**characterized in that**
the ceramic reinforcement elements (17) are arranged axially overlapping,
with the ceramic reinforcement elements (17) preferably having convex and concave end faces, with the convex end face of a reinforcement element (17) and the concave end face of a reinforcement element (17) adjacent thereto engaging into one another.

10. A lock for two-wheel vehicles in accordance with any one of the preceding claims,
**characterized in that**
between three and twelve reinforcement elements (17) are arranged next to one another.

11. A lock for two-wheel vehicles in accordance with any one of the preceding claims,
**characterized in that**
five bars of Al₂O₃ disposed in parallel next to one another and having a square cross-section of 2.4 mm x 2.4 mm are inserted into a hollow hoop section which is filled with a cement.

12. A lock for two-wheel vehicles in accordance with any one of the claims 1 to 10,
**characterized in that**
five round bars of cobalt bonded tungsten carbide disposed in parallel next to one another and having a diameter of 2.5 mm are inserted into a hollow hoop section which is filled with a cement.

13. A lock for two-wheel vehicles in accordance with any one of the preceding claims,
**characterized in that**
the ceramic reinforcement elements (17) have an aspect ratio from 1 to 1,000, with a diameter from 0.1 to 10 mm and with a length from 1 to 100 mm.

14. A lock for two-wheel vehicles in accordance with any one of the preceding claims,
**characterized in that**
the ceramic reinforcement elements (17) have a length from 10 to 20 mm.

15. A lock for two-wheel vehicles in accordance with any one of the preceding claims,
**characterized in that**
the ceramic reinforcement elements (17) have a diameter from 0.7 to 1.5 mm.

16. A lock for two-wheel vehicles in accordance with any one of the preceding claims,
**characterized in that**
the ceramic reinforcement elements (17) are made partly or completely from Al₂O₃, ZrO₂, Si₃N₄, SiC, TiC, a hard metal or a cermet.

## Revendications

1. Cadenas de deux-roues pour cadenasser un deux-roues,
dans lequel une portion de cadenas (11, 61, 77) comprend plusieurs éléments de renforcement céramiques (17, 51, 81) en composite métal/céramique,
dans lequel le cadenas de deux-roues est un cadenas à étrier,
dans lequel la portion de cadenas est un étrier du cadenas à étrier, qui comprend un étrier creux (15) dans lequel sont agencés les éléments de renforcement céramiques (17, 51),
dans lequel le diamètre des éléments de renforcement céramiques (17) s'élève à environ 1/3 du diamètre intérieur de l'étrier creux (15),
dans lequel les éléments de renforcement céramiques (17) sont noyés dans une matrice (29, 31) en résine époxy, en matière plastique, en élastomère, en polymère, en ciment ou en métal, et
dans lequel la matrice est
- soit une structure solide en nid abeilles (31) dans laquelle les éléments de renforcement céramiques (17) sont intégrés,
- soit une structure en nid d'abeilles (31) en métal dans laquelle les éléments de renforcement céramiques (17) sont noyés par fusion de telle façon que les éléments de renforcement céramiques (17) sont fixés de manière stationnaire.

2. Cadenas de deux-roues selon la revendication 1,
**caractérisé en ce que** la matrice est formée par un liant (29) dans lequel les éléments de renforcement céramiques (17) sont remplis.

3. Cadenas de deux-roues selon la revendication 1,
**caractérisé en ce que** les éléments de renforcement céramiques (17) sont logés à l'intérieur de la matrice avec possibilité de rotation autour de leur axe longitudinal.

4. Cadenas de deux-roues selon l'une des revendications 1 à 3,
**caractérisé en ce que** les éléments de renforcement céramiques (17) possèdent une forme allongée.

5. Cadenas de deux-roues selon l'une des revendications 1 à 4,
**caractérisé en ce que** plusieurs éléments de renforcement céramiques (17) sont agencés parallèlement les uns aux autres.

6. Cadenas de deux-roues selon l'une des revendications 1 à 5,
**caractérisé en ce que** plusieurs éléments de renforcement céramiques (17) sont agencés en décalage axial les uns par rapport aux autres.

7. Cadenas de deux-roues selon l'une des revendications précédentes,
**caractérisé en ce que** les éléments de renforcement céramiques (17, 51, 81) sont dotés d'un enrobage en métal (15, 31, 77).

8. Cadenas de deux-roues selon l'une des revendications précédentes,
**caractérisé en ce que** les éléments de renforcement céramiques (17) possèdent une section ronde ou polygonale.

9. Cadenas de deux-roues selon l'une des revendications précédentes,
**caractérisé en ce que** les éléments de renforcement céramiques (17) sont agencés en chevauchement axial,
les éléments de renforcement céramiques (17) possédant de préférence des faces frontales convexes et concaves, la face frontale convexe d'un élément de renforcement (17) et la face frontale concave d'un élément de renforcement (17) voisin de celui-ci s'engageant l'une dans l'autre.

10. Cadenas de deux-roues selon l'une des revendications précédentes,
**caractérisé en ce qu'**il est prévu entre trois et douze éléments de renforcement céramiques (17) agencés les uns à côté des autres.

11. Cadenas de deux-roues selon l'une des revendications précédentes,
**caractérisé en ce que** cinq bâtonnets, en Al₂O₃ avec une section carrée de 2,4 mm x 2,4 mm, sont intégrés parallèlement les uns à côté des autres dans une portion de l'étrier creux qui est remplie avec un ciment.

12. Cadenas de deux-roues selon l'une des revendications 1 à 10,
**caractérisé en ce que** cinq bâtonnets, en carbure de tungstène lié par du cobalt, avec une section ronde d'un diamètre de 2,5 mm, sont intégrés parallèlement les uns aux autres dans une portion de l'étrier creux qui est remplie avec un ciment.

13. Cadenas de deux-roues selon l'une des revendications précédentes,
**caractérisé en ce que** les éléments de renforcement céramiques (17) présentent un rapport d'aspect de 1 à 1000, avec un diamètre de 0,1 à 10 mm et une longueur de 1 à 100 mm.

14. Cadenas de deux-roues selon l'une des revendications précédentes,
**caractérisé en ce que** les éléments de renforcement céramiques (17) possèdent une longueur de 10 à 20 mm.

15. Cadenas de deux-roues selon l'une des revendications précédentes,
**caractérisé en ce que** les éléments de renforcement céramiques (17) possèdent un diamètre de 0,7 à 1,5 mm.

16. Cadenas de deux-roues selon l'une des revendications précédentes,
**caractérisé en ce que** les éléments de renforcement céramiques (17) sont réalisés partiellement ou complètement en Al₂O₃, ZrO₂, Si₃N₄, SiC, TiC, en métal dur ou en cermet.
